(19) Europäisches Patentamt
European Patent Office
Office européen des brevets

(11) EP 2 487 650 B1

(12) **EUROPEAN PATENT SPECIFICATION**

(45) Date of publication and mention
of the grant of the patent:
**21.08.2013 Bulletin 2013/34**

(51) Int Cl.:
***G06T 7/40*** (2006.01)      ***G06K 9/46*** (2006.01)

(21) Application number: **11382040.1**

(22) Date of filing: **11.02.2011**

(54) **Bioinspired system for processing and characterising colour attributes of a digital image**

Durch die Biologie inspirierte Vorrichtung zur Verarbeitung und Characterisierung von Farbattributen eines digitalen Bildes

Processus inspiré par la biologie pour le traitement et la caractérisation des attributs de couleur d'un image numérique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.08.2012 Bulletin 2012/33**

(73) Proprietor: **FUNDACIÓN TECNALIA RESEARCH & INNOVATION**
**48160 Derio Vizcaya (ES)**

(72) Inventors:
• **Garrote Contreras, Estíbaliz**
**48170, Zamudio (Vizcaya) (ES)**
• **Iriondo Bengoa, Pedro, María**
**48940, Leioa (Vizcaya) (ES)**

(74) Representative: **Carpintero Lopez, Francisco**
**Herrero & Asociados, S.L.**
**Alcalá 35**
**28014 Madrid (ES)**

(56) References cited:
• **BENITEZ-DIAZ D ET AL: "Neural-like network model for color images analysis systems", NEURAL NETWORKS, 1994. IEEE WORLD CONGRESS ON COMPUTATIONAL INTELLIGEN CE., 1994 IEEE INTERNATIONAL CONFERENCE ON ORLANDO, FL, USA 27 JUNE-2 JULY 1994, NEW YORK, NY, USA,IEEE, vol. 3, 27 June 1994 (1994-06-27), pages 1415-1420, XP010127412, DOI: 10.1109/ICNN.1994.374493 ISBN: 978-0-7803-1901-1**
• **ADRIEN WOHRER ET AL: "Virtual Retina: A biological retina model and simulator, with contrast gain control", JOURNAL OF COMPUTATIONAL NEUROSCIENCE, KLUWER ACADEMIC PUBLISHERS, BO, vol. 26, no. 2, 1 August 2008 (2008-08-01), pages 219-249, XP019678598, ISSN: 1573-6873**
• **Adrien Wohrer: "Model and large-scale simulator of a biological retina with contrast gain control", INRIA Sophia Antopolis PhD thesis, March 2008 (2008-03), pages 1-340, XP000002659253, Nice-Sophia Antopolis, FR Retrieved from the Internet: URL:http://www.gnt.ens.fr/~awohrer/doc/the sis_adrien_wohrer.pdf [retrieved on 2011-09-16]**

EP 2 487 650 B1

**Description**

## TECHNICAL FIELD OF THE INVENTION

This present invention is encompassed within the technical field of systems for the processing and characterisation of colour attributes of digital images that are applicable, for example, to machine vision environments.

## BACKGROUND OF THE INVENTION

The retina is a highly complex organ. Up to the present, inventors have not known of a proposal that models it in its entirety, but rather there are models that approach one or more of the following issues:

- Connection structure.
- Nature of the connections.
- Temporal behaviour.
- Achromatic and chromatic pathways.

Many models make proposals on the structure and nature of the retina connections. These models attempt to define what could be named the retina architecture or design.

The structure of known models begins in the photoreceptor layer. Some proposals model it as a square mesh (as a conventional image), an hexagonal mesh [R. SIMINOFF. "SIMULATED BIPOLAR CELLS IN FÓVEA OF HUMAN RETINA" BIOLOGICAL CYBERNETICS , 64, PP 497- 504 1991. 497- 504 1991, HEAR_95], by means of random models [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006] or based on real retina samples [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007]. Horizontal and bipolar cells are found in the second layer. Some of the models locate opponency processes in this layer [R.SIMINOFF. "SIMULATED BIPOLAR CELLS IN FÓVEA OF HUMAN RETINA" BIOLOGICAL CYBERNETICS, 64, PP. 497- 504 1991], although others attribute it to the effect of amacrine cells [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007]. Some models, after this stage, include the amacrine cell layer. Finally, ganglion cells are situated in the last stage.

Regarding this structure, there are models that specify the number of connections between the different types of cells, such as in H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, HENN_02, H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, M. SAGLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008 and S. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259- 274. 1996. Additionally, different subtypes can be distinguished within each of these types of cells, such as: type On and Off cells [M. SAGLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008], different types of ganglion, amacrine and bipolar cells [D. BALYA, B. ROSKA, T. ROSKA, F.S. WERBLIN. "A CNN FRAMEWORK FOR MODELING PARALLEL PROCESSING IN A MAMMALIAN RETINAL" INTERNATIONAL JOURNAL OF CIRCUIT THEORY AND APPLICATIONS N°30 PP. 363- 393. 2002], ganglion type P and M [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006], midget bipolar and diffuse and ganglion type P and M [S. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259- 274. 1996 ] or midget, parasol and bistratified ganglion cells [J. H. VAN HATEREN, L. RUTTIGER, H. SUN, B. B. LEE. "PROCESSING OF NATURAL TEMPORAL STIMULI BY MACAQUE RETINAL GANGLION CELLS" THE JOURNAL OF NEUROSCIENCE, VOL 22 (22) 5, PP. 9945-9960. 2002].

On an architecture with different levels of detail, the cells that make them up are characterized. Each cell is described according to its spatial behaviour and, at times, its temporal behaviour. The most usual spatial models consist in the combination of Gaussians of different sizes and amplitudes. [W. RODIECK. "QUANTITATIVE ANALYSIS OF CAT RETINAL GANGLION CELL RESPONSE TO VISUAL STIMULI". VISION RESEARCH, 5, PP. 583-601. 1965, D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007, XU_02, WOHR_08, HENN_02]. There are other proposals such as the Mexican Hat [M. SAGLAM, Y. HAYASHIDA, N. MURAYAMA. "A RETINAL CIRCUIT MODEL ACCOUNTING FOR WIDE-FIELD

AMACRINE CELLS" COGNITIVE NEURODYNAMICS VOL 3 N1 PP. 25-32. 2008] or the use of Gaussian derivatives [GHOS_08].

The set of stimuli that reach the cell's receptive field (x and y axis) are integrated in a weighted manner in terms of their position in the receptive field and of the function that models its behaviour. This is expressed in the following manner:

$$\text{Cell total stimulus} = \int_{\text{Cell receptive field}} f_{\text{spatial model}}(x, y) * \text{Stimulus}(x, y) \qquad \text{(eq. 1)}$$

The cell's temporal behaviour allows linking the neurophysiological measurements directly to the results of the model in dynamic processes, although this entails substantially increasing their complexity (usually the overall complexity is reduced by simplifying other aspects of the model). The temporal models work on equations with partial derivatives that include feedback and feedforward components. The most common strategies in models with temporary components are: integrate and fire models (IF) and lineal-non lineal models (LN) (see [C. KOCH. "BIOPHYSICS OF COMPUTATION" OXFORD UNIVERSITY PRESS. 1999] for a summary).

Although the above models are applied to different cell types, in the case of photoreceptors, specific functions are used such as photoreceptor signal compression based on the equations of Naka-Rushton and Valeton and Van Norren, where the exponential factors and the constants are adjusted [SHAH_96, SAGL_08, VALB_08, KUNK_09. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259-274. 1996, M. SAGLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008, T. KUNKEL T, E. REINHARD. "A NEUROPHYSIOLOGY-INSPIRED STEADY-STATE COLOR APPEARANCE MODEL" JOSA A, VOL. 26, ISSUE 4, PP. 776-782. 2009].

The most common functions in the stage of connection of cell layers are the weighted sum and subtraction of signals. However, some authors [K. A. ZAGHLOUL. "OPTIC NERVE SIGNALS IN A NEUROMORPHIC CHIP I: OUTER AND INNER RETINA MODEL" IEE TRANSACTIONS ON BIOMEDICAL ENGINEERING, V 51, N 4, 2004, S. GROSSBERG S, E. MINGOLLA, J. WILLIAMSON. "SYNTHETIC APERTURE RADAR PROCESSING BY A MULTIPLE SCALE NEURAL SYSTEM FOR BOUNDARY AND SURFACE REPRESENTATION" NEURAL NETWORKS. VOL 8, IS. 7-8, PP. 1005 - 1028. 1995, F. J. DÍAZ-PERNAS, ANTÓN-RODRIGUEZ, J. F. DÍEZ-HIGUERA, M. MARTÍNEZ-ZARZUELA. "A BIO-INSPIRED NEURAL MODEL FOR COLOUR IMAGE SEGMENTATION" ANNPR 2008, LNAI 5064, PP. 240-251. 2008] use division, such as the shunt inhibition or gain inhibition model that were previously described and used in other applications [CARANDINI, D.J. HEEGER. "SUMMATION AND DIVISION BY NEURONS IN PRIMATE VISUAL CORTEX" SCIENCE 264. PP 1333- 1336. 1994, D. J. HEEGER D. J., SIMONCELLI E. P., MOVSHON J. A. " COMPUTATIONAL MODELS OF CORTICAL VISUAL PROCESSING". PROCEEDINGS OF THE NATIONAL ACADEMY OF SCIENCES, PP 93, 623-627 1996, V. TORRE, T. POGGIO. "A SYNAPTIC MECHANISM POSSIBLY UNDERLYING DIRECCIONAL SELECTIVITY TO MOTION" PROC. ROY. SOC LOND. B 202, PP. 409-416. 1978].

Nervous spikes are produced as the output of ganglion cells. The most usual transformation functions to nervous spikes are through exponential functions [J. W PILLOW, J. SHLENS, L. PANINSKI, A. SHER, A. M. LITKE, E. J. CHICHILNISKY, E. P. SIMONCELLI. "SPATIO-TEMPORAL CORRELATIONS AND VISUAL SIGNALLING IN A COMPLETE NEURONAL POPULATION" NATURE, VOL 454, PP. 995-999. 2008], Poisson process or Gamma distributions [MEISTER M, BERRY MJ 2ND. "THE NEURAL CODE OF THE RETINA". NEURON., 22(3) PP. 435-50.1999].

Generally, retina models that have been developed up to date are focused on achromatic components. In the case of the different colour retina models entail variable abstraction levels on a physiological reality. Among these models three types can be distinguished:

• Models that include chromatic pathways as an extrapolation of the behaviour of achromatic components and that generally are represented as an opponency pathway red vs. green [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007, BARR_96] and additionally another yellow vs. blue [R. SIMINOFF. "SIMULATED BIPOLAR CELLS IN FÓVEA OF HUMAN RETINA" BIOLOGICAL CYBERNETICS, 64, PP. 497- 504 1991, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008, ANDR_03, F. J. DÍAZ-PERNAS, ANTÓN-RODRIGUEZ, J. F. DÍEZ-HIGUERA, M. MARTÍNEZ-ZARZUELA. "A BIO-INSPIRED NEURAL MODEL FOR COLOUR IMAGE SEGMENTATION" ANNPR 2008, LNAI 5064, PP. 240-251. 2008, J. H. VAN HATEREN, L. RUTTIGER, H. SUN, B. B. LEE. "PROCESSING OF NATURAL TEMPORAL STIMULI BY MACAQUE RETINAL GANGLION CELLS" THE JOURNAL OF NEUROSCIENCE, VOL 22 (22) 5, PP. 9945-9960. 2002].

- The theoretical proposals where a cell connection scheme is proposed in order to reproduce cell features that are observed in physiological experiments. The majority include post-retina stages or either in the LGN and the cortex [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, MICH_78, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008].

- Mixed models include a bioinspired part and another of colour attribute calculations without a direct basis on anatomical or physiological measurements [GUTH_91, T. KUNKEL T, E. REINHARD. "A NEUROPHYSIOLOGY-INSPIRED STEADY-STATE COLOR APPEARANCE MODEL" JOSA A, VOL. 26, ISSUE 4, PP. 776-782. 2009, RUDE_98].

On the other hand, at present, most capture and visualisation digital systems work with red (R), green (G) and blue (B) colour components. However, human beings analyse colours mainly through their hue (H), saturation (S) and intensity (I), as for example dark orange colour. There are multiple transformations between both spaces of representation, which, as a general rule, have been developed for the comparison or measurement of one or two colours in highly controlled environments.

Most research done in the field of machine vision works with images in gray levels. At first, this was due to the difficulty in obtaining colour images as well as the computational cost involved in increasing the number of input data. However, when the capacity to capture colour images improved and the computational capacity increased in a spectacular manner, the main problem appeared: how to represent and/or measure a colour in order to make absolute and/or relative evaluations about it? For example, how to establish whether a colour is more or less dark than another?

As shown by J.C. Maxwell, colour can be represented by three values. The most usual is the use of red, green and blue levels (RGB: red, green, blue). The difficulty lies in transforming these three hues into colour attributes. Throughout time, many and varied ways of measuring and representing colour have been proposed (in [R. G. KUEHNI. "COLOR SPACE AND ITS DIVISIONS: COLOR ORDER FROM ANTIQUITY TO THE PRESENT" JOHN WILEY & SONS PUBLICATIONS. 2003] there is a compilation thereof). With these works our knowledge has increased while at the same time the existing lack of knowledge about colour, its behaviour and the way living beings perceive it, has been confirmed. In this sense, it is important to highlight that at this moment, one of the main points of agreement on colour is the fact that it is a perception rather than a physical feature of elements. Not being able to compare two colours reliably means, on the one hand, not having stability in the segmentation of objects due to colour, and, on the other, having great difficulty when tracking elements in image or video sequences.

Sight is one of the senses, if not the sense, that provides most information to human beings. Machine vision arose as the field of knowledge that aims to automate image processing and its recognition. Bio-computational works that are currently being carried out in this field are focusing on the analysis of a hierarchical sequence of the processes that living beings perform. In order to carry out this analysis, within the computational focus, the following lines are being worked on:

- Measurement and study of the visual signal: modulation, intensity, activation times [L. M. MARTINEZ. "THE GENERATION OF VISUAL CORTICAL RECEPTIVE FIELDS." PROGRESS IN BRAIN RES. 154, 2006, G.Q. BI AND M.M. POO. "SYNAPTIC MODIFICATIONS IN CULTURED HIPPOCAMPAL NEURONS: DEPENDENCE ON SPIKE TIMING, SYNAPTIC STRENGTH, AND POSTSYNAPTIC CELL TYPE". J. NEUROSCI., 18. 1998, M. C. BOOTH AND E. T. ROLLS. "VIEW-INVARIANT REPRESENTATIONS OF FAMILIAR OBJECTS BY NEURONS IN THE INFERIOR TEMPORAL VISUAL CORTEX". CEREB. CORTEX, 8, 1998, G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006].

- Analysis of the models and activation areas when facing different controlled stimuli [G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006, HIRS_06, M. C. BOOTH AND E. T. ROLLS. "VIEW-INVARIANT REPRESENTATIONS OF FAMILIAR OBJECTS BY NEURONS IN THE INFERIOR TEMPORAL VISUAL CORTEX". CEREB. CORTEX, 8, 1998].

- Modelling of the processing channels and processing pathways: movement detection, location of objects present in a scene, object recognition, colour evaluation, etc. [G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006, T. SERRE, L. WOLF, S. BILESCHI, M. RIESENHUBER AND T. POGGIO. "OBJECT RECOGNITION WITH CORTEX-LIKE MECHANISMS," IEEE TRANSACTIONS ON PATTERN ANALYSIS AND MACHINE INTELLIGENCE, 29, 3, 2007, T. SERRE "LEARNING A DICTIONARY OF SHAPE-COMPONENTS IN VISUAL CORTEX: COMPARISON WITH NEURONS, HUMANS AND MACHINES" 2006, T. SERRE "LEARNING A DICTIONARY OF SHAPE-COMPONENTS IN VISUAL CORTEX: COMPARISON WITH NEURONS, HUMANS AND MACHINES" 2006].

There are studies dealing with colour processing and analysis within the primary information pathway modelling [BURK_06, HUNG_05. C. VAN ESSEN. "PROCESSING OF COLOR, FORM AND DISPARITY INFORMATION IN VISUAL AREAS VP AND V2 OF VENTRAL EXTRASTRIATE CORTEX IN THE MACAQUE MONKEY". J. NEUROSCI., 6(8), PP. 2327-51. 1986, C. P. HUNG , G. K. KREIMAN , T. POGGIO , J. J. DICARLO. "FAST READOUT OF OBJECT IDENTITY FROM MACAQUE INFERIOR TEMPORAL CORTEX," SCIENCE 310, 2005].

The main ways that have been proposed to specify colour appearance grouped by types can be classified in the following manner:

- Direct evaluation systems or models: where only measurements taken on the element to be evaluated are taken into account:

  - **Colour spaces:** where a set of physical measurements of the element to be measured is defined. Within this type of systems one can find examples such as CIE XYZ, or spaces related to artificial systems such as RGB, CMY, HSV...
  - **Ordered colour systems:** where the colour appearance is specified for a set of colours [R. G. KUEHNI. "COLOR SPACE AND ITS DIVISIONS: COLOR ORDER FROM ANTIQUITY TO THE PRESENT" JOHN WILEY & SONS PUBLICATIONS. 2003]:

    ■ Munsell colour system: It consists of a set of colour samples ordered according to three attributes: value, chroma (Munsell's) and hue (Munsell's). It can be mentioned that despite having a structure based on homogeneous differences, it does not allow truly measuring colours that either vary more than one attribute or have very small variations.
    ■ Swedish natural colour system (NCS): It is based on the fact that a human being is capable of defining the content of one or two fundamental colours (red, green, blue and yellow) and the quantity of white and black that are present in the sample to be evaluated. It has its basis on the opponency pathways of the human visual system.
    ■ OSA uniform colour scale (OSA-UCS): the purpose of this scale is to obtain a system where the differences in perception between adjacent elements are equal irrespective of the variation of one or several of its attributes (Δs= Δcolour).

- Joint evaluation models: where context information is included.

  - Hurvich and Jameson (1955-1956) defined a psychological specification system of colours. One of the main contributions was the influence of the adaptation processes.
  - In 1972, Guth proposed the first version of his colour evaluation model. Throughout the years, improvements on this first model have been proposed.
  - CIELAB or Cie 1976 L*a*b*. In 1976 CIE proposed the CIELAB colour space in order to meet the need to control the quality in manufacturing processes. Based on the CIE 1931 XYZ, it defines three colour attributes L*, a* and b* in order to measure slight colour variations.
  - CIELuv was created for the same purpose as CIELab. Due to its simplicity, it is nowadays a widely used model. It was proposed, along with CIELAB, as neither is clearly better. Each one has specific areas of application where its use is better suited.
  - Nayatani et al. proposed in 1981 a colour appearance model for use in the design and evaluation of illumination systems. In summary, the proposed model allows calculating the most relevant colour attributes, predicting the Hunt effect, the Stevens effect and the Helson-Judd effect and is analytically reversible. Contrarily, it does not account for changes in the surrounding areas, it is developed for its use in discrete elements, does not allow modeling changes in background colour: simultaneous contrast or surrounding luminance (Bartleson-Breneman equations). Also, it overdimensions the Helson-Judd effect and does not include the effect of the rods[FAIR_ 98] [NAYA_86].

- In 1982, R.W.G. Hunt proposed a new colour model that includes the effects of the adaptation to the context and the influence of surrounding elements. This is the only model that deals independently with these elements and also the only one that includes the effects of the rods. Its complexity that allows it to adapt and predict multiple effects, is at the same time one of its drawbacks due to the difficulty inherent in the adjustment of all of its parameters. Additionally, it is not a reversible model.
- In 1984, Derrington, Krauskopft and Lennie caried out a series of experiments to characterise the neurons present in the lateral geniculate nucleus (LGN). In order to represent stimuli and subsequently characterise each type of neuron, they define a space where the chromatic part is based on the chromatic diagram proposed by MacLeod and Boynton, to which they add a third dimension that takes luminance into account.
- In 1993, DeValois et al. proposed a four stage model for colour processing based on the visual system of primates.
- RLAB was introduced by Fairchild et al. in 1993; it has the aim to define a simple colour model that allows predicting the colour appearance of a stimulus. It is based on the CIELab system. The advantage of this model is its simplicity and the possibility of inversion. At the same time, the fact that it is a simplified model, it does not permit modelling all the features of colour appearance.
- LLAB was introduced by Luo et al. in 1996 (1st version). It was generated based on colour appearance and colour difference measurements. This model allows modelling the chromatic adaptation, the effect of the environment and the Hunt effect. Its main drawback is that it is not analytically reversible.
- In 1997, CIE approved a proposal for a new model that would encompass the most relevant models to date. The CIECAM97 model includes the model of Nayatani et al., the RLAB model, LLAB model and the Hunt et al. model. It is a relatively simple model that allows predicting adaptation effects, the influence of the environment or the effects related to the luminance level.
- The CIECAM02 model was proposed in 2002 as a revision of the CIECAM97. Multiple colour data bases and colour order systems data bases were used in order to select and adjust the functions and parameters. The aim of this revision has been to improve the CIECAM97 results, to reduce its complexity and to improve its invertibility as well as introduce new elements identified in the human visual system.

The most relevant contributions of these models can be summed up in the following:

- From a descriptive perspective, Munsell's colour system is especially interesting as it is a system organised according to colour perception. Because of this characteristic, it is one of the most common systems when evaluating the goodness of new colour model proposals.
- The CIELAB and CIELUV systems are widely used in industrial applications due to their simplicity and small number of parameters they use.
- Among colour appearance models, the Hunt model is the most complete model.
- CIECAM97 and CIECAM02 are two of the most widely used advanced models as they entail a common working proposal for works in the field of colour appearance models.
- Bionspired models lack systematically generated evaluations of the generated results remaining thus as theoretical or semi-theoretical proposals.

The biggest limitations of these type of systems and which are solved by the proposed sustem, are that they only allow evaluating simple and isolated colour samples (a sole colour), they do not provide information on all the points in an image, and the calculations made have to be carried out in a manual way and can not be carried out in an automated way.

The article by Benitez Diaz et al. "Neural-like network model for color images analysis systems", Proceedings of the IEEE International Conference on Neural Networks, 1994, IEEE, vol. 3, pages 1415-1420, XP010127412) describes a two-layer neural network architecture for color object classification.

## DESCRIPTION OF THE INVENTION

The present invention aims to overcome the inconveniences of the aforementioned state of the art by means of a bioinspired system for processing colour attributes of images, that can be implemented in a computer, with an ordered architecture that emulates the functions of photoreceptors, horizontal cells, bipolar cells and ganglion cells of a primate retina, from an original digital image received by means of data input, analyses the image, detects the original image's colour attributes providing a defined data output for each pixel of the original digital image made up of representative data of the colour attributes of the original image, characterised in that

it comprises a plurality of emulators that make up a virtual retina where each emulator has a cellular base structure with a modulated data input, a calculation centre to process the modulated data and an output of the data processed by the calculation centre;

each emulator is parametrised by

a first parameter that is representative of the type of emulators to which it is connected and of its relative weights that are indicative of the contribution of each type of emulator to the input signal received by the emulator to which they are connected,

a second parameter that is representative of an integration radius that is indicative of the circular area of connections of a modulated input to the emulator by which it receives modulated data from those emulators to which it is connected to in said connection area and

a third parameter representative of a position of the emulated cell of the primate retina extrapolated to the virtual retina, such that the third parameters make up a set that emulates a cell distribution of the primate retina;

the system comprises a photoreceptor emulator module that comprises a plurality of photoreceptor cell emulators, a bipolar emulator module that comprises a plurality of bipolar cell emulators, a horizontal emulator module that comprises a plurality of horizontal cell emulators and a ganglion emulator module that comprises emulators of type R ON, R OFF, G ON and G OFF midget ganglion and small bistratified cells;

each of the type G ON and G OFF midget ganglion cell emulators is connected to a plurality of emulators of type ON and OFF midget bipolar cell emulators each of which in turn is connected through horizontal cell emulators, to a plurality of type M cone photoreceptor cell emulators and to a plurality of horizontal emulators, and generate a first colour channel (a) of output signals;

each of the bistratified ganglion cell emulators is connected to a plurality of blue bipolar and type DB1 diffuse bipolar cell emulators which in turn are connected through horizontal cell emulators to a plurality of type L, M or S cone photoreceptor cell emulators and that generate a second colour channel (b) of output signals;

each of the type R ON and OFF midget ganglion cell emulators is connected to a plurality of type R ON and OFF midget bipolar cell emulators which in turn are connected through horizontal cell emulators, to a plurality of cone type L photoreceptor emulators and to a plurality of horizontal emulators, and generate a third colour channel (A) of output signals;

The data input of each emulator can be modulated based on a Gaussian modulation function. On the other hand, the weighted combination corresponding to the output value generated by at least one of the bipolar emulators can be a weighted sum function or a weighted division function. In turn, the output value of at least one of the ganglion emulators can be generated based on an exponential function.

In accordance with the invention, at least some of the emulators of the same type can be interconnected to each other through interconnections that define additional input signals received by emulators of another type to which emulators of the same type are connected.

The optimisation of channels a, b and A can be accomplished based on their optimum adjustment to public databases on colour perception, or alternatively, based on its optimum level of adjustment to straight lines of the Munsell samples with constant hue or based on the circularity level of the constant chroma samples. In this latter case, the output signals of the first and second output channel can be optimised on a ring circularity index of constant chroma Munsell colour samples based on a measurement of circularity defined as the normalised sum for each constant chroma ring of the squared differences between the average ring radius and the radius of each colour point, the centre of the rings being defined as the average value of all the points of a given value, and the radii being as the distance of each point to that average point, and carrying out a normalisation by dividing each normalised sum by the average squared ring radius to avoid that the exterior rings have more weight than the inner ones.

According to the present invention, it is possible to automate the processing of the colour attributes in an image being the system of the invention, contrary to the systems and methods based on bioinspired models of prior art, not a theoretical proposal but a complete system, working and with verified results.

The new method for the processing and characterisation of colour images is constituted by the structure of colour appearance models with a nucleus bioinspired in the human visual system: the retina model. This is a method for colour evaluation of each pixel in an image through the calculation of its 6 colour attributes: hue, lightness, brightness, saturation, chroma and colourfulness. Furthermore, this new method detects the edges that are present in an image (boundaries between objects, different materials, finishes...).

Summarized, the colour processing model as backed by its results, allows identifying and configuring the output channels of the retina that make up the usual "a","b" and "A" channels in colour appearance models.

The results provided by this model have been compared with the CIECAM02 model and have obtained noticeably better results in the "ab" plane and in the attributes calculated on Munsell colour samples.

As can be seen from the above, the present invention is based on a colour processing model that is based on a functional retina model and on the structure of colour appearance models.

In order to configure the method presented here, the circularity of constant chroma rings of the Munsell samples has been employed as the criterion, and the channels a, b and A which are necessary to generate the colour attributes, have been identified and configured. These channels correspond with the output channels of the retina: type G midget ganglion, bistratified ganglion and type R midget ganglion respectively. Modifying the nervous spike generation functions, an ab space with high circularity level has been obtained that comes close to the ideal space for Munsell colour samples.

This set of characteristics positions the system as a tool for great use in processes such as:

- Image segmentation, as it provides information on the edges that are present in an image. It obtains edges that are present not only in achromatic pathways (as those that are usually applied) but also in chromatic pathways, and, on the other hand, as it characterises each colour area with 6 attributes, of greater reliability than the usual RGB, HSI...
- Object detection, as with the edges and their colour characteristics, it can group pixels which potentially belong to the same object.
- Characterisation of the elements present in an image, through its morphological features which can be calculated based on the detected edges and similar colour areas, and on the other hand, through the colour components of the surfaces.
- Object identification: as it has a set of colour attributes that are more stable than usual ones and that adapt to the identification process in images in different contexts.

These characteristics allow its use in specific applications of a very varied nature, such as:

- Video monitoring and security: people and object tracking, people counting, traceability, biometric control applications (face recognition...), colour videos processing...
- Quality control in manufacturing processes: control of elements with varied morphologies and/or different finishes (colours, textures...), production control for colour ranges of a product.
- Sport applications: player tracking.
- Biomedical applications: the identification of the most representative elements in images: cell samples, automatic automatic analysis of markers or staining, magnetic resonance imaging...

As can be seen from the above, the present invention overcomes the inconveniences of prior art providing a practical and efficient system for the processing of colour attributes of digital images.

## DESCRIPTION OF THE DRAWINGS

Aspects and embodiments of the invention will be described herein after on the grounds of some drawings, in which

figure 1 is a scheme of the flow of of information and connections of a embodiment of the system in accordance with the present invention;

figure 2 shows a block diagram of the embodiment of the system shown in figure 1;

figure 3 schematically shows the design of an embodiment of a cellular base structure of an emulator in accordance with the present invention, with an input modulated by a Gaussian function, a centre that makes the calculations on the input signals to the system and an output that is homogeneous throughout the whole of its area of influence;

figure 4 schematically shows an embodiment of the definition of the integration radius of an emulator and the set of emulators of the previous layer to which it is connected;

figure 5 is a representation of the overlapping factor of the interconnection of the emulators in layer i, establishing the set of positions making up the distribution or mesh of each cell type;

figure 6 shows examples of images generated by each cell layer that is emulated by means of the present invention based on the diagram shown in figure 2;

figure 7 shows an example of a flow of information corresponding to the progression of different information pathways in the model on which the method of this invention is based;

figure 8 is a graphical representation of an example of the establishing of pixels of an image from the signal generated by emulators of the same type;

figure 9 shows a connection scheme of an embodiment of the emulator modules in accordance with the invention;

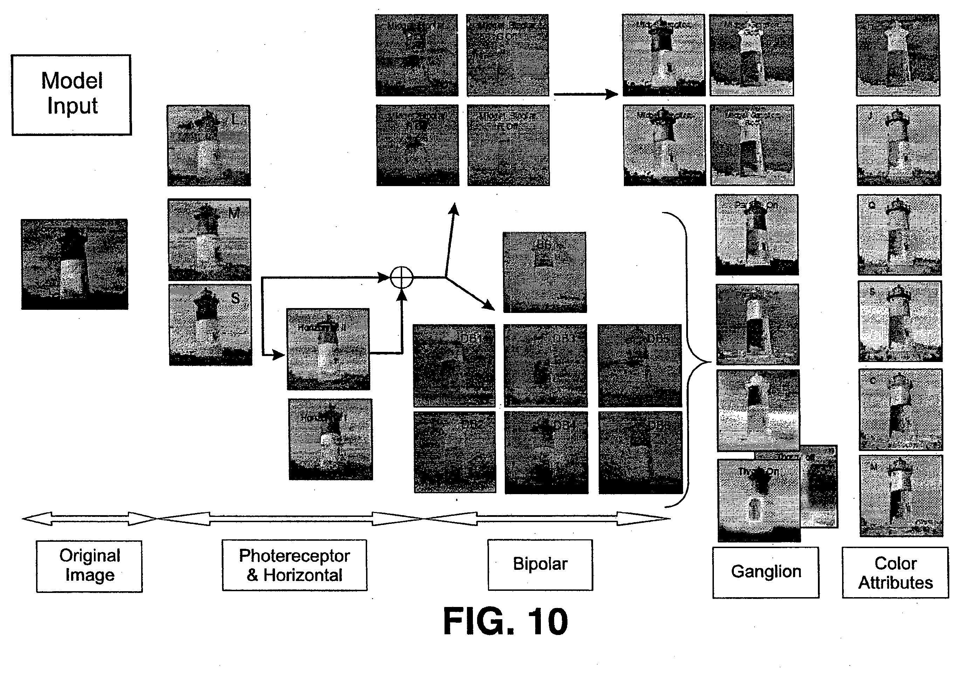

figure 10 is a block diagram which is the scheme of the basic structure of emulators that make up the present invention.

figure 11 shows an example of the processing chain carried out by the model, where in each stage the generated images are shown;

figure 12 is a graphical representation corresponding to the result of an optimisation for samples of Munsell Value 5.

## EMBODIMENTS OF THE INVENTION

The method for processing and characterising colour attributes in an image in accordance with the present invention is formed by the following elements:

- Bioinspired model: functional retina model that processes input images and generates multiple output channels.
- Colour channels: from original channels generated by the retina model, the necessary channels for colour processing have been identified:
- Adapted channels: each of the three channels identified as colour relevant in the retina are reconfigured by means of the parameters of spike generation functions that characterise them.
- Calculation of colour attributes: hue, lightness, brightness, saturation, chroma and colourfulness.

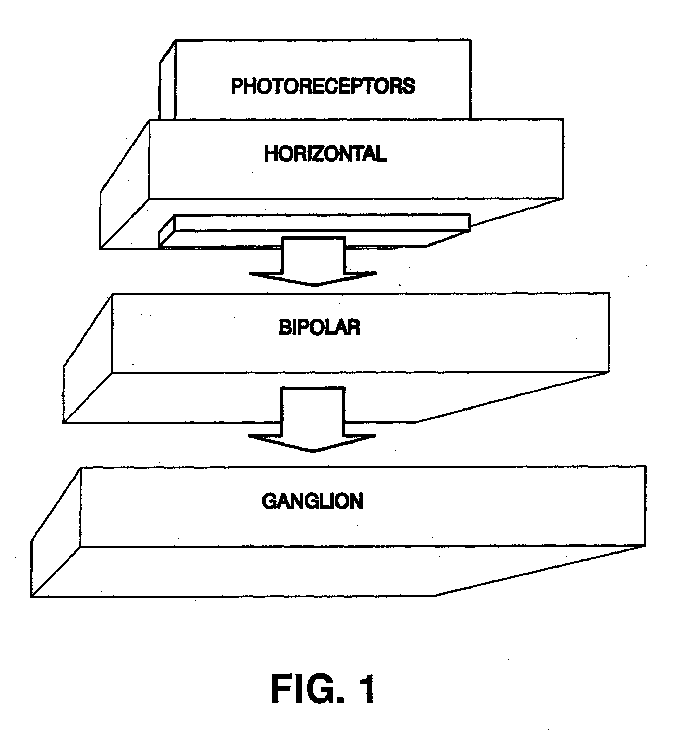

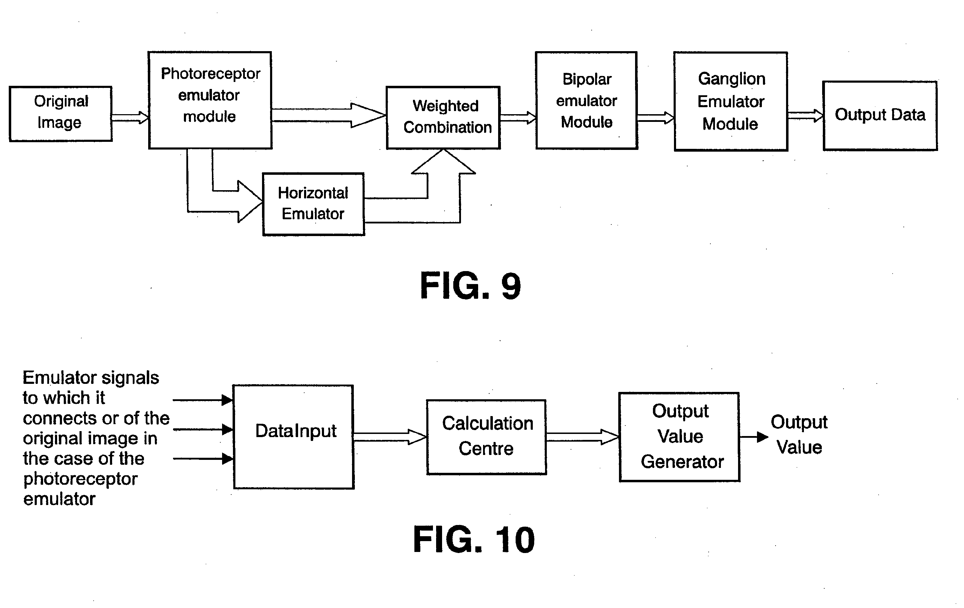

According to the representation shown in figures 1 and 9, the processing and characterisation system for colour attributes in images based on a bioinspired retina model is formed of an ordered architecture that is filled with emulator modules of different cell types, namely photoreceptor, horizontal, bipolar and ganglion cell modules. The output signals of the different layers will be calculated through the weighted sum of the input signals to each layer.

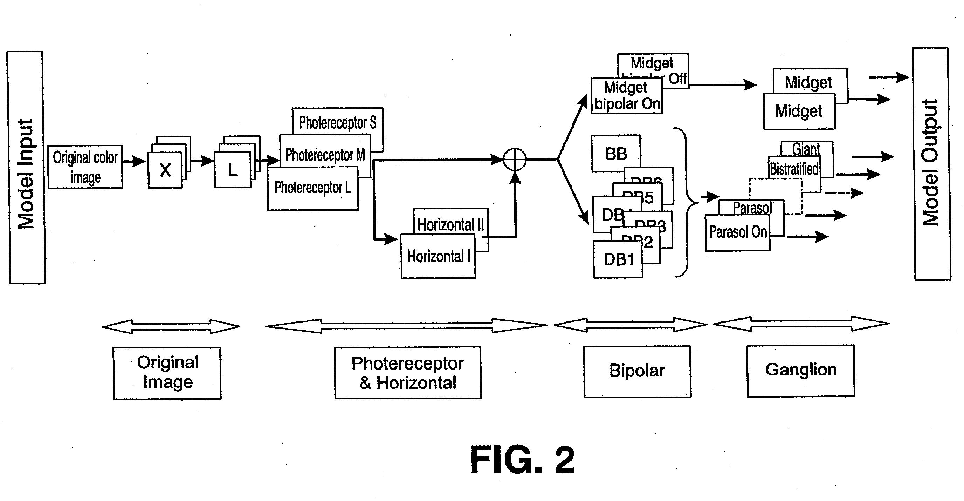

As shown in figure 2, the different types of cells have been placed, configured and connected on this architecture, namely:

a) Photoreceptor cells:

    a. Cones: L, M and S types.
    b. Rods.

b) Horizontal cells:

    a. HI.
    b. HII.

c) Bipolar cells:

    a. Midget bipolar

        i. ON type: R and G type.
        ii. OFF type: R and G type.

    b. S cone bipolar, BB.
    c. Diffuse bipolar.

        i. OFF type:

          - DB1.
          - DB2.
          - DB3.

        ii. ON type:

          - DB4.
          - DB5.
          - DB6.

    d. Rod bipolar.

d) Ganglion cells:

    a. Midget ganglion cells:

        i. ON type: R and G type.
        ii. OFF type: R and G type.

    b. Parasol cells:

        i. ON type.

ii. OFF type.

c. Bistratified cells.
d. Large sparse bistratified cells.

iii. ON type.
iv. OFF type.

e. Giant ganglion cells.
f. Broad thorny cells
g. Narrow thorny cells

v. ON type.
vi. OFF type.

When wishing to calculate the signal of a type j cell, first, the total signal generated by the type i cells that connect to said type j cell is calculated, each weighted by a factor that represents the distance of said connection to the centre of the type j cell. Second, all types of cells that connect with the type j to be calculated are added, the weight factor is established according to the relative number of connections of each type with the type j cell. The equation that describes it is the following:

$$Signal_{Cell\,type\,j} = \sum_{\substack{\forall\,Cell\,connected \\ to\,the\,cell \\ type\,j}} w_{Cell\,type\,i\,over\,cell\,type\,j} \sum_{\substack{\forall\,cell\,type\,i \\ in\,the\,integration\,field \\ of\,the\,cell\,type\,j}} w(relative\ position\ i,\ j)_{Gaussian} * Signal_{Cell\,type\,i}$$

(eq. 2)

The weights of the sums are determined according to the two methods described for the calculation of parameters 1 to 3.
In he case of the connection between the photoreceptors with the horizontal and bipolar cells, two possibilities can be worked with. The first is the weighted sum where the signal of horizontal cells is subtracted from that of the photoreceptor signal (negative weights in equation 2) and the second by means of a shunt or divisive inhibition. This function is calculated in the following manner. As in the previous case, whatever the signal of a type j cell that one wishes to caclulate.,A calculation is made of the total signal that reaches said cell (such as described in the previous case) from the type i cells (excitatory signal) and type k cells (inhibitory signal). Both signals are divided and a gain factor is applied. The calculation is gathered in the following equation:

$$Signal_{Cell\,type\,j} = w_{divisive\,factor\,for\,type\,j} \frac{\sum\limits_{\substack{\forall\,Cell\,type\,i\,in\,the\,integration \\ field\,of\,the\,cell\,type\,j}} w(relative\ position\ i,\ j)_{Gaussiana} * Signal_{Cell\,type\,j}}{\sum\limits_{\substack{\forall\,Cell\,type\,i\,in\,the\,integration \\ field\,of\,the\,cell\,type\,k}} w(relative\ position\ k,\ j)_{Gaussian} * Output_{Cell\,type\,k}}$$

(eq. 3)

where j corresponds to bipolar cells, i to photoreceptors and k to the horizontal ones.
The on and off pathways of the model are separated in the bipolar cell stage. The following function is used for this:

$$Signal_{bipolar\,on} = Signal_{bipolar\,input} - \overline{Signal}_{bipolar\,input}$$

(eq. 4)

$$Signal_{bipolar\,off} = \overline{Signal_{bipolar\,input}} - Signal_{bipolar\,input} \qquad \text{(eq. 5)}$$

where the x symbol represents the average value of the variable x.

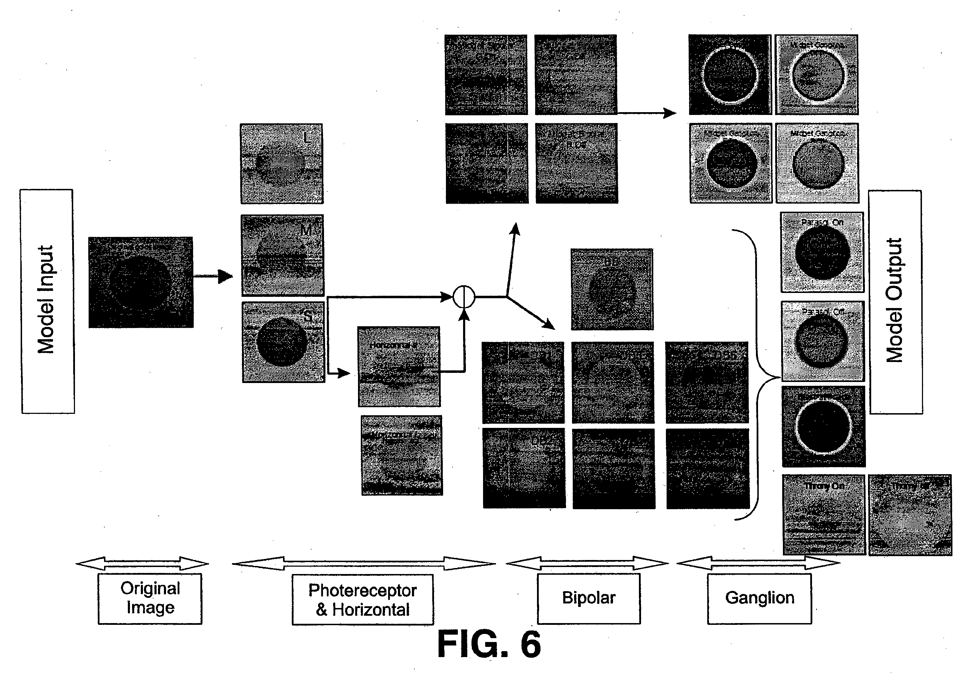

On the other hand, an exponential function has been used in the example case in figure 6 for the conversion signal of the continuous signals towards nervous spikes.

$$f(x) = A \cdot e^{B \cdot x} \qquad \text{(eq. 6)}$$

However, equation 6 can be replaced by other generic functions for the generation of spikes.

On the other hand, each cell receives weighted signals from some of the types present in the previous layer. The following are the connections established between the emulators of different cell types.

• Horizontal cells:

Table 1. Connections between horizontal cell and photoreceptors emulators

| Horizontal | HI | HII |
|---|---|---|
| Photoreceptor | Type L and M cones Rods | Type L, M and S cones |

• Bipolar cells:

Table 2. Connections between bipolar cell, photoreceptor and horizontal cell emulators

| Bipolar | Midget | Diffuse | | | | | | Blue | Rods |
|---|---|---|---|---|---|---|---|---|---|
| | | DB1 | DB2 | DB3 | DB4 | DB5 | DB6 | | |
| Photoreceptor-Horizontal | L or M cones I and II Horizontal | L, M and/or S cones I and II Horizontal | | | | | | S cones II Horizontal | Rods I Horizontal |

• Ganglion cells:

Table 3. Connections between ganglion and bipolar cell emulators

| Ganglion | Midget | | Parasol | | Bistratified | Large sparse | | Giant sparse | | Broad thorny | Narrow Thorny | |
|---|---|---|---|---|---|---|---|---|---|---|---|---|
| | Off | On | Off | On | | Off | On | Off | On | | Off | On |
| Bipolar | Midget Off type | Midget Off type | DB2 DB3 | DB4 DB5 | DB1 BB | DB1 | DB6 | DB1 | DB6 | DB2 DB4 | DB2 | DB4 |

This method allows analysing an image through multiple information pathways that obtain, in a parallel manner, different morphological characteristics (edges of the elements as present in the image) and chromatic characteristics (colour that characterise each image point). Figure 2 shows these information pathways that have the following characteristics:

- Midget ganglion cells: cells with spatial opponency of chromatic nature:

    centre vs. surround.

- Parasol ganglion cells: cells with spatial opponency of achromatic nature:

    centre vs. surround.

- Small bistratified ganglion cells: cells with spatial opponency of chromatic nature: centre vs. surround.
- Big ganglion cells: cells with opponency centre vs. surround with achromatic nature.

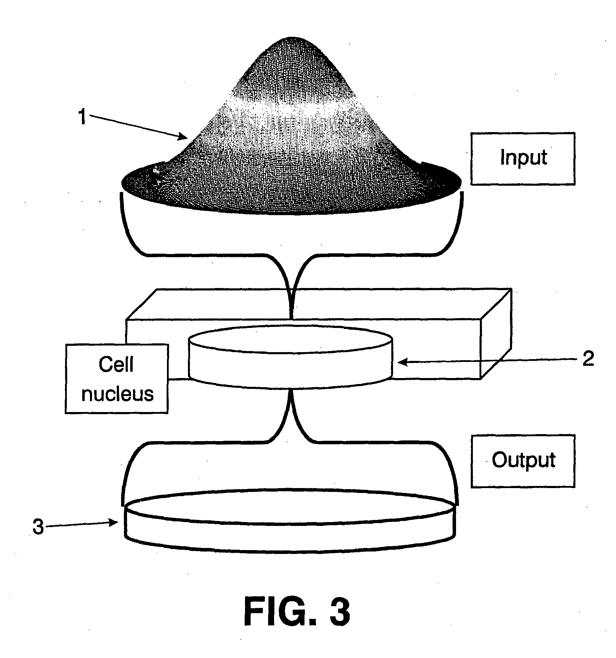

According to what is shown by figure 3, in the design of the system a cellular base structure has been determined with an entry -1- modulated by a Gaussian function based on the following equation:

$$\text{Cell total stimulus} = \int_{\text{Cell receptive field}} f_{\text{spatial model}}(x,y) * \text{Stimulus}(x,y) \qquad \text{(eq. 7)}$$

(already shown above as equation 1), a centre -2- that makes calculations on the input signals of the model and an output -3- that is homogeneous throughout its area of influence.

As can be seen in figure 3, this cellular base structure of the emulators entails that the emulator receives, through its data input -1-, signals from other emulators to which it is connected or in the case of a photoreceptor cell emulator, of the original digital image that is in its area of influence.

The Gaussian type input signal means that each input signal to the cell has a different weight based on the distance to the centre of the area of integration of the cell. The weight is determined by means of a Gaussian function. The set of signals that reach the area of influence of the cell, which is named integration field, is added (integrated) to generate the total input signal to the cell. (In figure 3, upper area -1-the Gaussian function where the centre has greater weight than the surround is shown). Each cell has a set of output arbours that represent the set of connections that it establishes with the subsequent layer. In all of these connections, irrespective of their position, the generated output signal has the same value, that is, it is constant.

With this element as its constituent unit, the bioinspired model of the retina has been built. This model is characterised by a set of parameters which entails that each type of cell present in each layer of the model is characterised by: **Parameter type 1.** Cell types to which it is connected and their relative weights which indicate the contribution of each cell type to the input signal to the cell to which they connect.

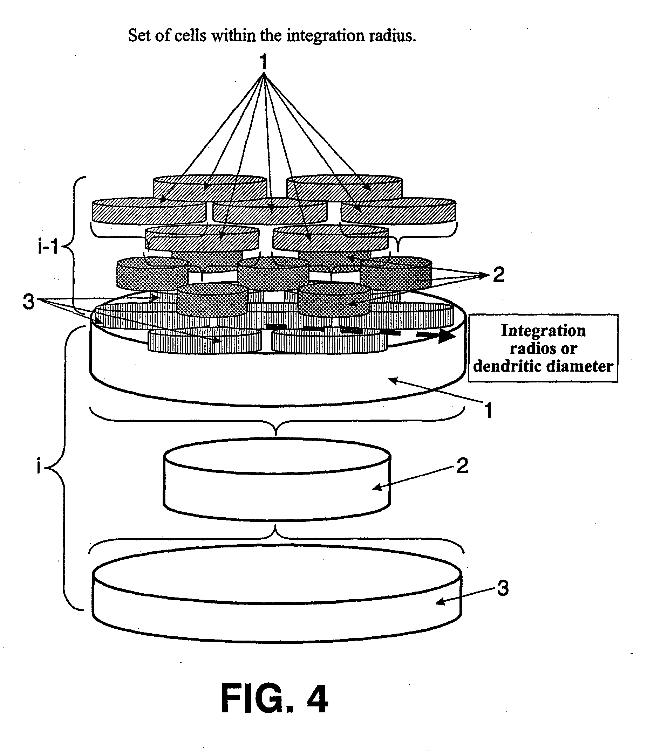

**Parameter type 2.** Integration radius: it indicates the circular area within which it establishes the connections with the cells of the preceding layer that are its inputs. Figure 4 shows a connection schematic diagram of a cell and the set of cells to which it connects in the immediately preceding layer. Each cell is represented following the schematic diagram shown in figure 3, with its input areas -1-, the core - 2- and the outputs -3-.

**Parameter type 3.** Cell distribution or mesh. Each cell is placed in a specific position within the xy plane of the retina: $\{x_{cell}, y_{cell}\}$. The z coordinate marks the depth within the retina where each cell type is located. The set of cell positions that belong to a same cell type constitute the distribution or mesh. This parameter is defined by the cell density and/or the overlapping factor, which is the number of cells of a certain type that sample a point in the retina.

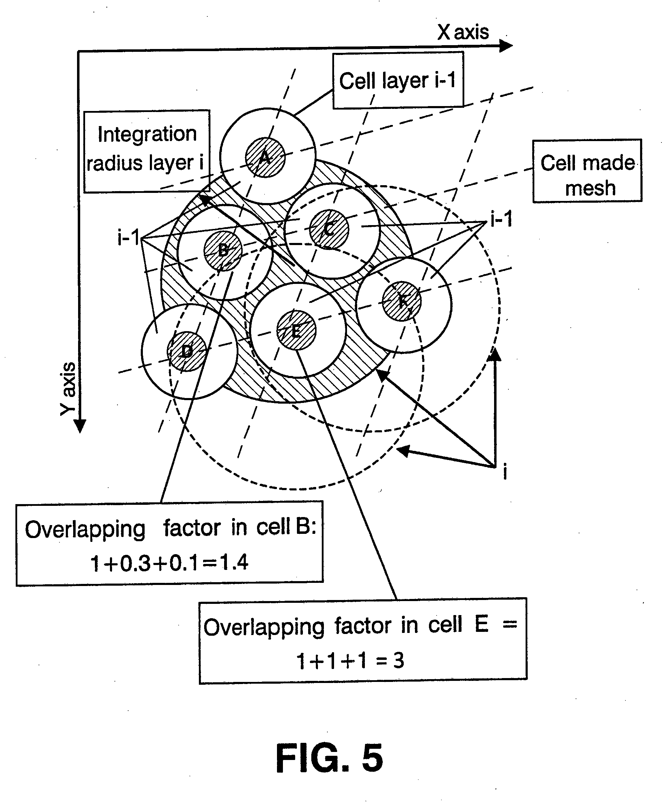

Figure 5 shows an example of the relationship between the overlapping factor and the positions (mesh) of two types of cells in consecutive layers. A set of type i-1 cells (i-1 circles) and a sample of type i cells (i circles) are represented. It is noteworthy to mention that the mesh admits other types of configurations: rectangular, hexagonal, variable, etc.

In order to be able to calculate the parameters of the cell mesh with an overlapping factor different to 1, an overlapping (or coverage) function is determined as the sum of the area that each of the cells of the layer to be calculated overlaps the cells in the next layer overlaps with the cell to be calculated, normalised through the division by the area of the cell to be calculated:

$$Overlapping\ factor_{j} = \frac{\sum_{\forall Cell\ in\ layer\ j-1} Area_{Overlapped}}{Area_{Cell\ j}} \qquad (eq.\ 8)$$

A function to be optimised can be established in order to obtain the values for each mesh and its overlapping factor. As an example of an embodiment of this invention, the aim is that the overlapping is optimally uniform around the real anatomical value. For this, the maximum and minimum overlapping values in the set of type j cells are measured and then are compared with the real value. In this way, the variation band of the values of the overlapping factor is delimited.

$$f_{j}^{OPTIMUS} = abs(Overlapping\ factor_{j}^{MAX} - Overlapping\ factor_{j}^{REAL}) +$$
$$abs(Overlapping\ factor_{j}^{REAL} - Overlapping\ factor_{j}^{MIN}) \qquad (eq.\ 9)$$

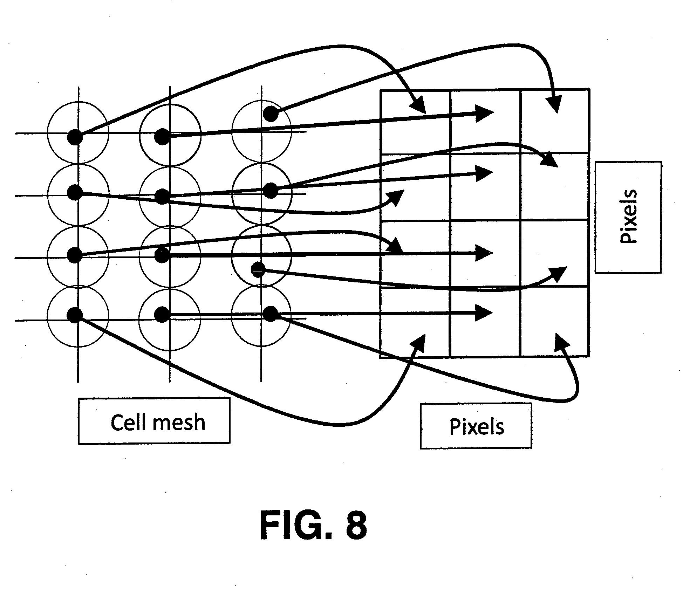

This analysis method produces a complete image in each cell stage. As each cell of the layer generates a signal and has a position within its layer, an image (set of values with spatial relations in a plane) is created when each generated signal is placed in its position. This fact is graphically shown in figure 8 wherein the cell mesh is shwon at the left, the cell centres are represented in grey, while at the right the pixels of an image are shown. The arrows show how each cell represents the values of each image pixel.

There are two possibilities to calculate these parameters:

- Estimate of the parameters based on biological data.
  Compiling existing biological data in scientific publications and estimating those that are not available.
  The number of connections with the immediately superior layer will be used in order to be able to establish the size of the dendritic fields of the different cells. Thereby and based on the receptive fields of the photoreceptors as a reference, the fields of the remaining layers can be calculated. The available information sources for this calculation are:

  - Dendritic field or integration field: physical size of the dendritic arbours.
  - Receptive field: size of the stimulus with influence in the cell. It is larger than the dendritic field as it includes the effect of interneuron connections both in the same layer as well as in previous layers.
  - Number of connections with the cells in the previous layers (its receptive field can be established if one knows this information plus the cell distribution in the previous layer).

The overlapping factor, which is the number of same-type cells that sample a point in the retina, will be used in order to calculate the distribution. An additional data is the number of cells of each type which can complement other data.

- Estimate of the parameters based on optimisation criteria.
  A target function to be optimised is established (edge detection, colour evaluation, generation of Gabor filters...)

and the values of the parameters that generate the optimum results for said optimisation function are calculated.

The following characteristics are obtained for the main associated channels and functions when estimating the parameters based on biological data:

Photoreceptors: cells with a homogeneous receptive field (without opponency) and chromatic nature.

$$\text{Photoreceptor type L} = \int\limits_{\substack{\text{Integration field} \\ \text{of the photoreceptor}}} \exp(-2*(x^2+y^2)/15^2)*L \text{ plane of the image}(x,y)$$

$$(eq.10)$$

$$\text{Photoreceptor type M} = \int\limits_{\substack{\text{Integration field} \\ \text{of the photoreceptor}}} \exp(-2*(x^2+y^2)/15^2)*M \text{ plane of the image}(x,y)$$

$$(eq. 11)$$

$$\text{Photoreceptor type S} = \int\limits_{\substack{\text{Integration field} \\ \text{of the photoreceptor}}} \exp(-2*(x^2+y^2)/15^2)*S \text{ plane of the image}(x,y)$$

$$(eq.12)$$

Horizontal cells: cells with a homogeneous receptive field (without presenting opponency) and with a partially achromatic nature.

$$\text{Horizontal type I} = \int\limits_{\substack{\text{Integration field of} \\ \text{horizontal cell type I}}} \exp(-2*(x^2+y^2)/41.23^2)*\left\{\begin{array}{l} 0.615*L \text{ Photoreceptor signal} \\ +0.385*M \text{ Photoreceptor signal} \end{array}\right\}$$

$$(eq. 13)$$

$$\text{Horizontal tipo II} = \int\limits_{\substack{\text{Integration field of} \\ \text{horizontal cell type II}}} \exp(-2*(x^2+y^2)/62.45^2)*\left(\begin{array}{l} 0.307*L \text{ Photoreceptor signal} \\ +0.193*M \text{ Photoreceptor signal} \\ +0.5*S \text{ Photoreceptor signal} \end{array}\right)$$

$$(eq. 14)$$

Midget bipolar cells: cells with opponency centre vs. surround with chromatic nature.

  a) Subtraction mode

$$\text{Midget bipolar R} = \int_{\substack{\text{Integration field of}\\ \text{the midget bipolar cell}}} \exp(-2*(x^2+y^2)/10^2)*\left(\begin{array}{l}\text{L Photoreceptor signal}\\ -0.6*(0.8*\text{Horizontal I Signal}+0.2*\text{Horizontal II Signal})\end{array}\right)$$

$$\text{(eq. 15)}$$

$$\text{Midget bipolar G} = \int_{\substack{\text{Integration field of}\\ \text{the midget bipolar cell}}} \exp(-2*(x^2+y^2)/10^2)*\left(\begin{array}{l}\text{M Photoreceptor signal}\\ -0.6*(0.8*\text{Horizontal I Signal}+0.2*\text{Horizontal II Signal})\end{array}\right)$$

$$\text{(eq. 16)}$$

b) Division mode

$$\text{Midget bipolar R} = \int_{\substack{\text{Integration field of}\\ \text{the midget bipolar cell}}} \exp(-2*(x^2+y^2)/10^2)*0.6\left(\frac{\text{L Photoreceptor signal}}{(0.8*\text{Horizontal I Signal}+0.2*\text{Horizontal II Signal})}\right)$$

$$\text{(eq. 17)}$$

$$\text{Midget bipolar G} = \int_{\substack{\text{Integration field of}\\ \text{the midget bipolar cell}}} \exp(-2*(x^2+y^2)/10^2)*0.6\left(\frac{\text{M Photoreceptor signal}}{0.8*\text{Horizontal I Signal}+0.2*\text{Horizontal II Signal}}\right)$$

$$\text{(eq. 18)}$$

In both modes, the On and Off types are calculated as follows:

$$\text{Midget bipolar R On} = \text{Midget bipolar } R - \overline{\text{Midget bipolar } R} \qquad \text{(eq. 19)}$$

$$\text{Midget bipolar R Off} = \overline{\text{Midget bipolar } R} - \text{Midget bipolar } R \qquad \text{(eq. 20)}$$

$$\text{Midget bipolar G On} = \text{Midget bipolar } G - \overline{\text{Midget bipolar } G} \qquad \text{(eq. 21)}$$

$$\text{Midget bipolar G Off} = \overline{\text{Midget bipolar } G} - \text{Midget bipolar } G \qquad \text{(eq. 22)}$$

Diffuse bipolar cells: cells with opponency centre vs. surround with achromatic nature.

a) Subtraction mode

$$\text{Bipolar DBX} = \int_{\substack{\text{Integration field}\\ \text{of the difusse}\\ \text{bipolar DBX}}} \exp(\frac{-2*(x^2+y^2)}{DifusseRadiusX^2})*\left(\begin{array}{l}[0.572*\text{L Photoreceptor Signal}-0.6*(0.8*\text{Horizontal I Signal}+0.2*\text{Horizontal II Signal})]\\ +[0.358*\text{M Photoreceptor Signal}-0.6*(0.8*\text{Horizontal I Signal}+0.2*\text{Horizontal II Signal})\\ [0.07*\text{S Photoreceptor Signal}-0.6*(\text{Horizontal II Signal})]\end{array}\right)$$

$$\text{(eq. 23)}$$

b) Division mode

$$\text{Bipolar DBX} = \int_{\substack{\text{Integration field} \\ \text{of the difusse} \\ \text{bipolar DBX}}} \exp(\frac{-2*(x^2+y^2)}{DifusseRadiusX^2})*0.6*\begin{pmatrix} [0.572*\text{L Photoreceptor Signal}/(0.8*\text{Horizontal I Signal}+0.2*\text{Horizontal II Signal})] \\ +[0.358*\text{M Photoreceptor Signal}/(0.8*\text{Horizontal I Signal}+0.2*\text{Horizontal II Signal}) \\ [0.07*\text{S Photoreceptor Signal}/(\text{Horizontal II Signal})] \end{pmatrix}$$

(eq. 24)

Where X= {1..6}. The integration radii are different for each type of diffuse bipolar cell DB1=24.29; DB2=25.29; DB3=30; DB4=26.92; DB5= 25:69; DB6=31.62.

Finally, the signals of the different subtypes of diffuse bipolar cells are calculated.

$$\text{Diffuse Bipolar DB1} = \overline{Bipolar\ DB1} - Bipolar\ DB1 \qquad \text{(eq. 25)}$$

$$\text{Diffuse Bipolar DB2} = \overline{Bipolar\ DB2} - Bipolar\ DB2 \qquad \text{(eq. 26)}$$

$$\text{Diffuse Bipolar DB3} = \overline{Bipolar\ DB3} - Bipolar\ DB3 \qquad \text{(eq. 27)}$$

$$\text{Diffuse Bipolar DB4} = Bipolar\ DB4 - \overline{Bipolar\ DB4} \qquad \text{(eq. 28)}$$

$$\text{Diffuse Bipolar DB5} = Bipolar\ DB5 - \overline{Bipolar\ DB5} \qquad \text{(eq. 29)}$$

$$\text{Diffuse Bipolar DB6} = Bipolar\ DB6 - \overline{Bipolar\ DB6} \qquad \text{(eq. 30)}$$

Blue bipolar cells: cells with opponency centre vs. surround with chromatic nature.

a) Subtraction mode

$$\text{Blue Bipolar} = \int_{\substack{\text{Integration field} \\ \text{of blue bipolar cell}}} \exp(\frac{-2*(x^2+y^2)}{28.5^2})*(\text{S Photoreceptor Signal} - 0.6*\text{Horizontal II Signal})$$

$$-\overline{Blue\ Bipolar} \qquad \text{(eq. 31)}$$

b) Division mode

$$\text{Blue Bipolar} = \int\limits_{\substack{\text{Integration field} \\ \text{of blue bipolar cell}}} \exp(\frac{-2*(x^2+y^2)}{28.5^2})*0.6\left(\frac{\text{S Photoreceptor Signal}}{\text{Horizontal II Signal}}\right)$$

$$\overline{-\textit{Blue Bipolar}}$$

(eq. 32)

Midget ganglion cells: cells with spatial opponency of chromatic nature: centre vs. surround.

$$\text{Midget ganglion R On} = 4.27*\exp\left\{1.96*\int\limits_{\substack{\text{Integration field of} \\ \text{midget ganglion cell}}} \exp(-2*(x^2+y^2)/10^2)*\text{Midget bipolar R On}\right\}$$

(eq. 33)

$$\text{Midget ganglion R Off} = 4.27*\exp\left\{1.96*\int\limits_{\substack{\text{Integration field of} \\ \text{midget ganglion cell}}} \exp(-2*(x^2+y^2)/10^2)*\text{Midget bipolar R Off}\right\}$$

(eq. 34)

$$\text{Midget ganglion G On} = 4.27*\exp\left\{1.96*\int\limits_{\substack{\text{Integration field of} \\ \text{midget ganglion cell}}} \exp(-2*(x^2+y^2)/10^2)*\text{Midget bipolar G On}\right\}$$

(eq. 35)

$$\text{Midget ganglion G Off} = 4.27*\exp\left\{1.96*\int\limits_{\substack{\text{Integration field of} \\ \text{midget ganglion cell}}} \exp(-2*(x^2+y^2)/10^2)*\text{Midget bipolar G Offf}\right\}$$

(eq. 36)

Parasol ganglion cells: cells with spatial opponency of achromatic nature: centre vs. surround.

$$\text{Parasol ganglion type On} = 4.27*\exp\left\{1.96*\int\limits_{\substack{\text{Integration field} \\ \text{of parasol ganglion cells}}} \exp(-2*(x^2+y^2)/62.5^2)*(0.4*\text{Bipolar DB4}+0.6*\text{Bipolar DB5})\right\}$$

(eq. 37)

$$\text{Parasol ganglion type Off} = 4.27 * \exp\left\{1.96 * \int\limits_{\substack{\text{Integration field} \\ \text{of parasol ganglion cells}}} \exp(-2*(x^2+y^2)/62.5^2)*(0.4*\text{Bipolar DB2}+0.6*\text{Bipolar DB3})\right\}$$

(eq. 38)

Small bistratified ganglion cells: cells with spatial opponency of chromatic nature: centre vs. surround.

$$\text{Small bistratified ganglion} = 4.27 * \exp\left\{1.96 * \int\limits_{\substack{\text{Integration field} \\ \text{of small bistratified} \\ \text{cell}}} \exp(-2*(x^2+y^2)/104.2^2)*(0.5\,\text{Difusse Bipoalr DB1}+0.5\,\text{Blue Bipolar})\right\}$$

(eq. 39)

Big ganglion cells: cells with opponency centre vs. surround with achromatic nature.

$$\text{Thorny ganglion type On} = 4.27 * \exp\left\{1.96 * \int\limits_{\substack{\text{Integration field} \\ \text{of thorny ganglion cell}}} \exp(-2*(x^2+y^2)/517^2)*(\text{Bipolar DB4})\right\}$$

(eq. 40)

$$\text{Thorny ganglion type Off} = 4.27 * \exp\left\{1.96 * \int\limits_{\substack{\text{Integration field} \\ \text{of thorny ganglion cell}}} \exp(-2*(x^2+y^2)/517^2)*(\text{Bipolar DB2})\right\}$$

(eq. 41)

The system of analysis shown in the figures creates a complete image in each cell stage. As each cell in a layer generates a signal and has a position within its layer, an image (set of values with spatial relations in a plane) is created when each generated signal is placed in its position.

Figure 6 is a sample image that shows the characteristics of the method applied to an image. A sample image has been chosen to show the performance of the method, specifically, the effect produced at the edges.

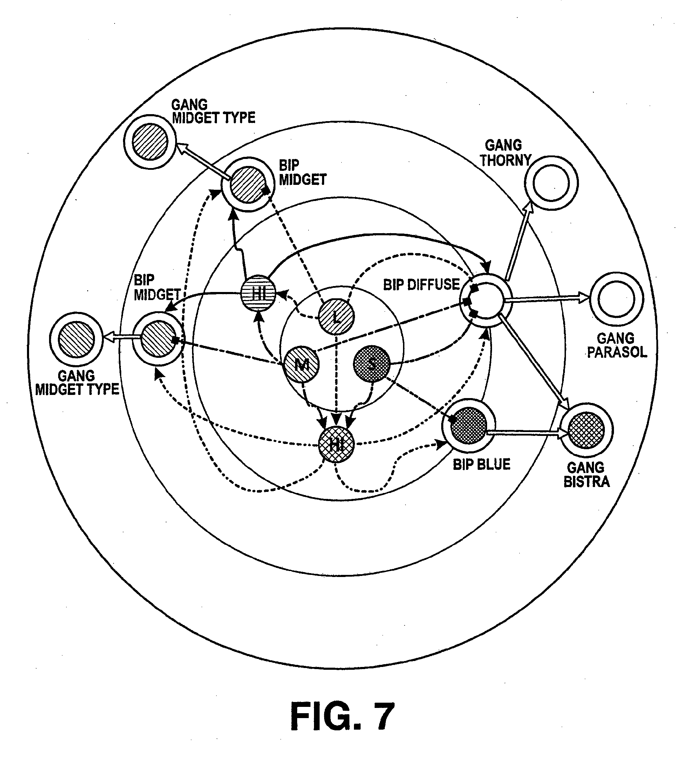

In turn, figure 7 shows the progression of the different information channels, from their origin in the photoreceptors to the ganglion cells. In this figure the information flow is shown and also the pathways that feed the centres are identified (arrows with ♦) and the cell surrounds (arrows with ►). By means of the information flow represented in figure 7 the connections between the different cell layers and the influence of each type of photoreceptor in each cell type can be seen. As can be observed, in this figure there are represented the processes in opponency (circles with a ring that represent the centre and surround processes in cells that have this type of opponency) as well as the colours (L and arrows that start from the L element= red colour; M and arrows that start from the M element = green colour; S and arrows that start from the S element = blue colour) to which each cell type is especially tuned (these colours are formed by the weighted sum of their input signals, see tables 1 to 3 for more detail on connections and equations 2 to 41 for the weights of each thereof).

The necessary channels for colour processing have been identified among the original channels generated by the retina model. These are channels a, b and A:

- Channel a corresponds with the midget ganglion type G channel.
- Channel b corresponds with the midget bistratified ganglion channel.
- Channel A corresponds with the midget ganglion type R channel.

The adapted channels are obtained by reconfiguring each of the three channels identified as colour relevant

EP 2 487 650 B1

in the retina through the parameters of the spike generating functions that characterise them, namely:

$$Ganglion\,G\,on = A_1 \exp(B_1 \bullet ganglion\,G\,on\,input) \qquad (eq.\,42)$$

$$Ganglion\,G\,off = A_2 \exp(B_2 \bullet ganglion\,G\,off\,input) \qquad (eq.\,43)$$

$$Bistratified\,Ganglion\,On = A_3 \exp(B_3 \bullet bistratified\,ganglion\,On\,input) \qquad (eq.\,44)$$

$$Bistratified\,Ganglion\,Off = A_4 \exp(B_4 \bullet bistratified\,ganglion\,Off\,input) \qquad (eq.\,45)$$

$$A_{model} = A_5 \exp(B_5 \bullet ganglion\,R\,on\,input) \qquad (eq.\,46)$$

In these equations, the values A1-A5 and B1-B5 correspond to configuration parameters whose calculation is shown below in the present description.

From a computational perspective, it is necessary to join type on and off signals in order to calculate the a and b channels in a single information channel. To do so, a generic value is applied to any of the ganglion input values according to the following criterion.

$$Given\,x \begin{cases} x \geq threshold \rightarrow f(x) = On\,\,Signal \\ x < threshold \rightarrow f(x) = Off\,\,Signal \end{cases} \qquad (eq.\quad 47)$$

To adjust these parameters, optimisation criteria on Munsell colour samples have been used: index of circularity of constant chroma rings. This adjustment is biologically justified as not all types of cells have to have the same parameters of the spike generating function, although generically other optimisation functions could be used that include colour evaluation criteria, as for example the approximation to straight lines of the constant hue samples, colour perception data bases, etc.

The measurement of the circularity level has been defined as the normalised sum for each constant chroma ring of the squared differences between the average radius of the ring and the radius of each sample. The centre of the rings has been established as the average value of all points of a given Value. The radii are defined as the distance of each point to the average point. The normalisation is carried out by dividing that sum by the average radius of the ring squared, in order to avoid that the outer rings have more weight than the inner rings. This is expressed by means of the following equations.

$$a_{centre} = \frac{\sum_{\forall\,chroma\,j} \sum_{\forall\,point\,i} a_{point\,i}^{chroma\,j}}{Number\,of\,points} \qquad (eq.\,48)$$

$$b_{centr} = \frac{\sum_{\forall\,chroma\,j}\sum_{\forall\,point\,i} b^{chroma\,j}_{point\,i}}{\text{Number of points}} \qquad (eq.\ 49)$$

$$Radius^{chroma\,j}_{point\,i} = \left(\left(a_{centre} - a^{chroma\,j}_{point\,i}\right)^2 + \left(b_{centre} - b^{chroma\,j}_{point\,i}\right)^2\right)^{1/2} \qquad (eq.\ 50)$$

$$Radius^{chroma\,j}_{mean} = \frac{\sum_{point\,i} Radius^{chroma\,j}_{point\,i}}{\text{Number of points ring j}} \qquad (eq.\ 51)$$

$$f_{optimise} = \frac{\sum_{\forall\,chroma\,j}\sum_{\forall\,point\,i}\left(Radius^{chroma\,j}_{mean} - Radius^{chroma\,j}_{point\,i}\right)^2 /\left(Radiua^{chroma\,j}_{mean}\right)^2}{\text{Number of points}} \qquad (eq.\ 52)$$

By means of this optimisation the following values are obtained for the parameters A1 to A5 and B1 to B5 for Munsell samples of Value 5.

Table 1. Optimisation results for Value=5

| A1 | A2 | A3 | A4 | B1 | B2 | B3 | B4 |
|----|----|----|----|----|----|----|----|
| 1.2 | 1.6 | 0.8 | 2 | 0.8 | 1.2 | 0.8 | 1.6 |

These values correspond to the configuration values that are applied in equations 42 to 46, therefore the values of each of the Value 5 Munsell samples are calculated.

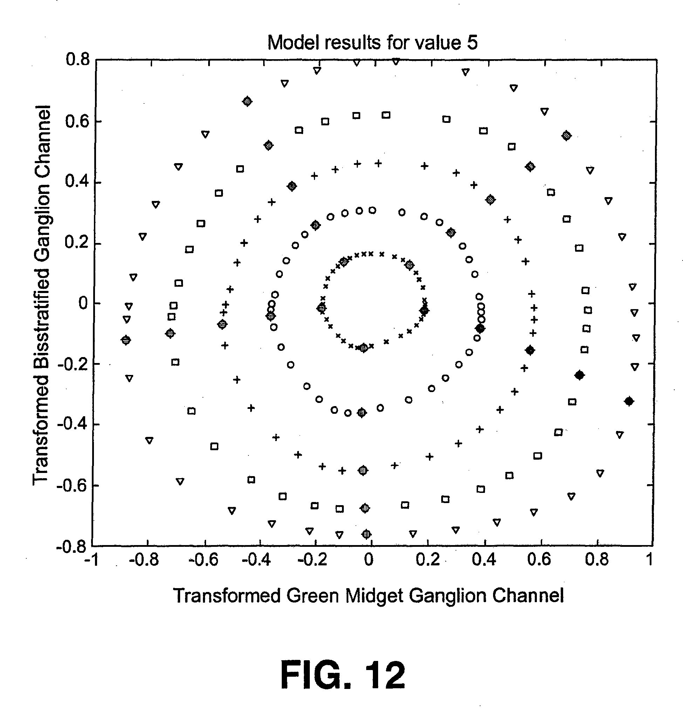

The corresponding graphical representation of this table can be seen in figure 12.

Additionally, the $a_{model}$, $b_{model}$ and $A_{model}$ channels must be readjusted. First, in order to be able apply the calculation of CIECAM02 colour attributes, it is necessary to scale the $a_{model}$ values, $b_{model}$ values and $A_{model}$ values based on the $a_{CIECAM02}$, $b_{CIECAM02}$ and $A_{CIECAM02}$ values. The scale factor is established in the following manner:

$$a'_{model} = k_1 \bullet a_{model} \qquad (eq.\ 53)$$

$$b'_{model} = k_2 \bullet b_{model} \qquad (eq.\ 54)$$

$$A'_{model} = k_3 \bullet A_{model} \qquad (eq.\ 55)$$

Such that k, $i \in \{1..3\}$, generates the minimum difference between values a, b and A CIECAM02 and values a', b' and A' of the model, $k_1$, $k_2$ and $k_3$ being the respective scaled parameters of channels a, b and A, and i referring to that, as there are three channels, there are also three scale parameters k.

This way, scaling of the signals from the retina model to a generic colour appearance model is achieved.

The calculation of colour attributes: hue, lightness, brightness, saturation, chroma and colourfulness is carried out through the application of formulas as defined in CIECAM02 for the calculation of colour attributes.

In order to show the model which is the basis of the present application in a global way, in figure 11 there is shown an example of the processing flow performed by the model where there are shown in each stage the images generated from the selected sample image.

**Claims**

1. System with a bioinspired nucleus for the processing of colour attributes of digital images that is implementable in a computer, with an ordered architecture that emulates the functions of photoreceptors, horizontal cells, bipolar cells and ganglion cells of a primate retina that allows to calculate colour attributes: hue, lightness, brightness, saturation, chroma and colourfulness, of each pixel present in an original digital image, that constitutes the entry to the system, comprising

   a plurality of emulators that form a virtual retina where each emulator has a cellular base structure with a modulated data input, a calculation centre to process the modulated data and an output of the data processed by the calculation centre;

   **characterised in that**

   each emulator is parametrised by

   a first parameter that is representative of the type of emulators to which it is connected and of its relative weights that are indicative of the contribution of each type of emulator to the input signal received by the emulator to which they are connected,

   a second parameter that is representative of an integration radius that is indicative of the area of circular connections of a modulated input to the emulator by which it receives modulated data of those emulators to which it is connected in said connection area, and

   a third parameter representative of a position of the emulated cell in the primate retina extrapolated to the virtual retina, in such a way that the third parameters make up a set that emulates a cell distribution of the primate retina;

   the system comprises a photoreceptor emulator module that comprises a plurality of photoreceptor cell emulators, a bipolar emulator module that comprises a plurality of bipolar cell emulators, a horizontal emulator module that comprises a plurality of horizontal cell emulators and a ganglion emulator module that comprises emulators of type R ON, R OFF, G ON and G OFF midget ganglion and small bistratified cells;

   each of the type G ON and G OFF midget ganglion cell emulators is connected to a plurality of emulators of type ON and OFF midget bipolar cell emulators each of which in turn are connected through horizontal cell emulators, to a plurality of type M cone photoreceptor cell emulators and to a plurality of horizontal emulators and generate a first colour channel (a) of output signals;

   each of the bistratified ganglion cell emulators is connected to a plurality of blue bipolar cell and type DB1 diffuse bipolar emulators which in turn are connected through horizontal cell emulators to a plurality of type L, M or S cone photoreceptor cell emulators and that generate a second colour channel (b) of output signals;

   each of the type R ON and OFF midget ganglion cell emulators is connected to a plurality of type R ON and OFF midget bipolar cell emulators which in turn are connected through horizontal cell emulators, to a plurality of cone type L photoreceptor emulators and to a plurality of horizontal emulators and that generate a third colour channel (A) of output signals;

   the output signals of the first and second output channels are optimised;

2. System, according to claim 1, **characterised in that** the modulated data input of each emulator is based in a Gaussian modulation function.

3. System, according to claim 1 or 2, **characterised in that** the weighted combination corresponding to the output value generated by at least one of the bipolar emulators is a weighted sum function.

4. System, according to claim 1, 2 or 3, **characterised in that** the weighted combination corresponding to the output value generated by at least one of the bipolar emulators is a weighted division function.

5. System, according to one of claims 1 through 4, **characterised in that** the output value of at least one of the ganglion emulators is generated based on an exponential function.

6. System, according to at least one of the claims 1 through 5, **characterised in that** at least some of emulators of the same type are interconnected to each other through interconnections that define additional entry signals to those received from other type of emulators to which said emulators of the same type are connected.

7. System, according to at least one of the claims 1 through 6, **characterised in that** the optimisation of channels a, b and A has been carried out according to its optimum adjustment level to public colour perception data bases.

8.  System, according to at least one of the claims 1 through 6, **characterised in that** the optimisation of channels a, b and A has been carried out according to its optimum adjustment level to straight lines of constant hue Munsell samples.

9.  System, according to claim 8, **characterised in that** the output signals of the first and second output channels are optimised on a ring circularity index of constant chroma on a Munsell colour sample based on a measurement of circularity defined as the normalised sum for each constant chroma ring of the squared differences between the average ring radius and the radius of each colour point, the centre of the rings being defined as the average value of all the points of a given value, and the radii being defined as the distance of each point to said average point, and carrying out a normalisation by dividing said normalised sum by the average squared ring radius in order to avoid that the exterior rings have more weight than the inner ones.

## Patentansprüche

1.  System mit einem durch die Biologie inspirierten Kern für die Verarbeitung von Farbattributen digitaler Bilder, welcher sich in einen Computer implementieren lässt, mit einer geordneten Architektur, die die Funktion von Fotorezeptoren, horizontalen Zellen, bipolaren Zellen und Ganglienzellen einer Primaten-Retina nachbildet, welche die Berechnung von Farbattributen ermöglicht: Färbung, Helligkeit, Glanz, Sättigung, Farbton und Farbenpracht jedes einzelnen in einem originalen Digitalbild vorhandenen Pixels, welches den Eingang zum System begründet, enthaltend eine Vielzahl von Emulatoren, die eine virtuelle Retina bilden, wobei jeder Emulator eine zellulare Basisstruktur mit einem modulierten Dateneingang, ein Kalkulationszentrum zum Verarbeiten der modulierten Daten und einen Ausgang der durch das Kalkulationscenter verarbeiteten Daten aufweist; **gekennzeichnet, dadurch, dass** jeder Emulator parametrisiert ist durch

    einen ersten Parameter, der für den Typ von Emulatoren, an welche er angeschlossen ist, repräsentativ ist, sowie für ihre relativen Gewichte, die den Beitrag jedes Typs des Emulators zum Eingangssignal angeben, dass seinerseits durch den Emulator empfangen worden ist, mit welchen sie verbunden worden sind,

    einen zweiten Parameter, der für einen Integrationsradius repräsentativ ist, der einen Bereich kreisförmiger Verbindungen eines modulierten Eingangs am Emulator anzeigt, durch welchen er modulierte Daten solcher Emulatoren empfängt, an welche er im besagten Verbindungsbereich angeschlossen ist und

    einen dritten Parameter, welcher für eine Position der emulierten Zelle in der Primaten-Retina repräsentativ ist, die auf die virtuelle Retina extrapoliert wird in solch einer Weise, dass die dritten Parameter einen Satz zur Verfügung stellen, welcher eine Zellverteilung der Primaten-Retina nachbildet;

    das System enthält ein Fotorezeptor nachbildendes Modul, das eine Vielzahl an Fotorezeptorzellemulatoren aufweist, ein bipolares Emulatormodul, das eine Vielzahl von bipolaren Zellemulatoren beinhaltet, ein horizontales Emulatormodul, dass eine Vielzahl von horizontalen Zellemulatoren aufweist und ein Ganglienemulatormodul, das Emulatoren des Typs R ON, R OFF, G ON und G OFF Kleinst-Ganglien- und kleine Netzhautganglienzellen beinhaltet;

    jeder der Typ G ON und G OFF Kleinst-Ganglien-Zellemulatoren ist mit einer Vielzahl von Emulatoren des Typs ON und OFF Kleinst-Bipolarzellemulatoren verbunden, die jeweils ihrerseits durch horizontale Zellemulatoren mit einer Vielzahl von Typ M Konus-Fotorezeptorzellemulatoren und einer Vielzahl von Horizontalemulatoren verbunden sind sowie einen ersten Farbkanal (a) an Ausgangssignalen erzeugen;

    jede der Netzhautganglienzellemulatoren ist mit einer Vielzahl von blauen Bipolarzellen und Typ DB1 diffusen Bipolaremulatoren verbunden, die ihrerseits durch horizontale Zellemulatoren mit einer Vielzahl von Typ L, M, S Konus Fotorezeptorzellemulatoren verbunden sind und die einen zweiten Farbkanal (b) an Ausgangssignalen erzeugen;

    jeder der Typ R ON und OFF Kleinst-Ganglien-Zellemulatoren ist verbunden mit einer Vielzahl von Typ R ON und OFF Kleinst-Bipolarzellemulatoren, die ihrerseits über horizontale Zellemulatoren an eine Vielzahl von Konustyp L Fotorezeptoremulatoren und eine Vielzahl von horizontalen Emulatoren angeschlossen sind und die einen dritten Farbkanal (a) an Ausgangssignalen erzeugen;

    die Ausgangssignale des ersten und zweiten Ausgangskanals werden optimiert;

2.  System nach Anspruch 1, **dadurch gekennzeichnet, dass** der modulierte Dateneingang jedes Emulators auf einer Gaußschen Modulationsfunktion basiert.

3.  System nach Anspruch 1 oder 2, **dadurch gekennzeichnet, dass** die gewichtete Kombination, welche zum Ausgangswert korrespondiert, der seinerseits durch wenigstens einen der bipolaren Emulatoren erzeugt wird, eine gewichtete Summenfunktion darstellt.

4. System nach Anspruch 1, 2 oder 3, **dadurch gekennzeichnet, dass** die gewichtete Kombination, die zum Ausgangswert korrespondiert, welcher durch wenigstens einen der bipolaren Emulatoren erzeugt worden ist, eine gewichtete Divisionsfunktion darstellt.

5. System nach einem der Ansprüche 1 bis 4, **dadurch gekennzeichnet, dass** der Ausgangswert wenigstens eines der Ganglienemulatoren auf Basis einer Exponentialfunktion erzeugt wird.

6. System nach wenigstens einem der Ansprüche 1 bis 5, **dadurch gekennzeichnet, dass** wenigstens einzelne der Emulatoren gleichen Typs miteinander durch Verbindungen gekoppelt sind, die zusätzliche Eingangssignale definieren, ergänzend zu denjenigen, welche von anderen Typen an Emulatoren empfangen wurden, mit denen die besagten Emulatoren des gleichen Typs verbunden sind.

7. System nach wenigstens einem der Ansprüche 1 bis 6, **dadurch gekennzeichnet, dass** die Optimierung der Kanäle a, b und A durchgeführt worden ist entsprechend seinem optimalen Anpassungsniveau im Vergleich zu öffentlichen Farbwahrnehmungsdatenbasen.

8. System nach wenigstens einem der Ansprüche 1 bis 6, **dadurch gekennzeichnet, dass** die Optimierung der Kanäle a, b und A durchgeführt worden ist entsprechend dem optimalen Anpassungsniveau im Vergleich zu graden Linien konstanter Färbungs-Munsell-Proben.

9. System nach Anspruch 8, **dadurch gekennzeichnet, dass** die Ausgangssignale des ersten und zweiten Ausgangskanals auf Basis eines Kreisringindex konstanten Farbtons auf einer Munsell-Farbprobe optimiert werden, die auf einer Ringmessung basiert, welche ihrerseits als genormte Summe für jeden konstanten Farbtonring der quadrierten Differenzen zwischen dem mittleren Ringradius und dem Radius jedes Farbpunktes basiert, wobei das Zentrum der Ringe als Mittelwert aller Punkte eines gegebenen Wertes definiert wird und die Radien als Abstand jedes Punktes zum Mittelwert bestimmt sind und eine Normierung durch Dividieren der besagten normierten Summe durch den mittleren quadrierten Ringradius bestimmt wird, um zu vermeiden, dass die äußeren Ringe einen größeren Beitrag als die inneren liefern.

## Revendications

1. Système à noyau inspiré de la biologie pour le traitement d'attributs de couleur d'images numériques qui est exécutable par un ordinateur, avec une architecture ordonnée qui simule les fonctions des cellules photoréceptrices, des cellules horizontales, des cellules bipolaires, et des cellules ganglionnaires de la rétine d'un primate de façon à permettre de calculer des attributs de couleur : teinte, nuance, brillance, saturation, chrominance, et variété de couleur de chacun des pixels présents dans une image numérique originale qui constitue l'entrée du système, comprenant :

   - une série d'émulateurs qui forment une rétine virtuelle, dans laquelle chacun de ces émulateurs ayant une structure de base cellulaire avec une entrée de données modulées, un centre de calcul pour traiter les données modulées et une sortie des données traitées par le centre de calcul,
   **caractérisé en ce que**
   chacun des émulateurs est paramétré par :
   - un premier paramètre qui est représentatif du type des émulateurs auxquels il est connecté et de leurs poids relatifs qui sont représentatifs de la contribution de chacun des types d'émulateurs dans le signal d'entrée reçu par l'émulateur auquel ils sont connectés,
   - un second paramètre qui est représentatif d'un rayon d'intégration qui est indicatif de la zone de connexions circulaires d'une entrée modulée de l'émulateur par lequel il reçoit des données modulées des émulateurs auxquels il est connecté dans la zone de connexion, et
   - un troisième paramètre représentatif de la position de la cellule simulée dans la rétine de primate dont la rétine virtuelle constitue l'extrapolation, de sorte que le troisième paramètre établisse un ensemble qui imite la distribution cellulaire de la rétine de primate,
   - ce système comprenant un module émulateur photorécepteur qui comprend une série d'émulateurs de cellules photoréceptrices, un module émulateur bipolaire qui comprend une série d'émulateurs de cellules bipolaires, un module émulateur horizontal qui comprend une série d'émulateurs de cellules horizontales et un module émulateur ganglionnaire qui comprend des émulateurs de cellules ganglionnaires midget et de petites cellules bi-stratifiées, de type R ON, R OFF, G ON et G OFF

- chacun des émulateurs de cellules ganglionnaires midget de type G ON et G OFF étant connecté à une série d'émulateurs de cellules bipolaires midget de type ON et OFF dont chacun est connecté par des émulateurs de cellules horizontales à une série d'émulateurs de cellules photoréceptrices en cône de type M et à une série d'émulateurs de cellules horizontales et générant un premier canal de couleur a) de signaux de sortie,

- chacun des émulateurs de cellules ganglionnaires bi-stratifiées étant connecté à une série d'émulateurs de cellules bipolaires bleues et de cellules bipolaires diffuses, de type DB1 dont chacun est connecté par des émulateurs de cellules horizontales à une série d'émulateurs de cellules photoréceptrices en de cône de type L, M ou S et générant un second canal de couleur b) de signaux de sortie,

- chacun des émulateurs de cellules ganglionnaires midget de type R ON et OFF étant connecté à une série d'émulateurs de cellules bipolaires midget de type R ON et OFF dont chacun est connecté par des émulateurs de cellules horizontales à une série d'émulateurs de cellules photoréceptrices en cône de type L et a une série d'émulateurs de cellules horizontales et générant un troisième canal de couleurs A) de signaux de sortie,

- les signaux de sortie du premier et du second canal de sortie étant optimisés.

2. Système conforme à la revendication 1,
   **caractérisé en ce que**
   l'entrée de données modulées de chacun des émulateurs est basée sur une fonction de modulation gaussienne.

3. Système conforme à la revendication 1 ou 2,
   **caractérisé en ce que**
   la combinaison pondérée correspondant à la valeur de sortie générée par au moins l'un des émulateurs de cellules bipolaires et une fonction de somme pondérée.

4. Système conforme à la revendication 1, 2 ou 3,
   **caractérisé en ce que**
   la combinaison pondérée correspondant à la valeur de sortie générée par au moins l'un des émulateurs de cellules bipolaires est une fonction de division pondérée.

5. Système conforme à une des revendications 1 à 4,
   **caractérisé en ce que**
   la valeur de sortie d'au moins l'un des émulateurs de cellules ganglionnaires est générée à partir d'une fonction exponentielle.

6. Système conforme à au moins l'une des revendications 1 à 5, **caractérisé en ce que**
   au moins certains des émulateurs du même type sont interconnectés les uns aux autres par des interconnexions qui définissent des signaux d'entrée additionnels à ceux reçus à partir d'autres types d'émulateurs auxquels ces émulateurs du même type sont connectés.

7. Système conforme à au moins l'une des revendications 1 à 6, **caractérisé en ce que**
   l'optimisation des canaux a, b et A a été effectuée en fonction de son niveau d'ajustement optimum aux bases de données de la perception de couleurs publique.

8. Système conforme à au moins l'une des revendications 1 à 6, **caractérisé en ce que**
   l'optimisation des canaux a, b et A a été effectuée en fonction de son niveau d'ajustement optimum aux lignes droites d'échantillons de couleur constante Munsell.

9. Système conforme à la revendication 8,
   **caractérisé en ce que**
   les signaux de sortie du premier et du second canal de sortie sont optimisés sur un indice de circularité des anneaux de chrominance constante sur un échantillon de couleurs Munsell à partir d'une mesure de circularité définie comme la somme normalisée pour chaque anneau de chrominance constante des carrés des différences entre le rayon moyen de l'anneau et le rayon de chaque point de couleur, le centre des anneaux étant défini comme la valeur moyenne de tous les points d'une valeur donnée, et les rayons étant définis comme la distance de chaque point au point moyen, et en effectuant une normalisation en divisant la somme normalisée par le carré du rayon moyen des anneaux de façon à éviter que les anneaux externes aient un poids supérieur à celui des anneaux internes.

# FIG. 1

FIG. 2

EP 2 487 650 B1

EP 2 487 650 B1

Input

Cell
nucleus

2

3

Output

FIG. 3

27

Set of cells within the integration radius.

Integration
radios or
dendritic diameter

# FIG. 4

X axis

Cell layer i-1

Integration
radius layer i

Cell made
mesh

i-1

i-1

Y axis

Overlapping factor in cell B:
1+0.3+0.1=1.4

Overlapping factor in cell E =
1+1+1 = 3

i

FIG. 5

Model Input

Model Output

Original Image

Photoreceptor & Horizontal

Bipolar

Ganglion

FIG. 6

# FIG. 7

**FIG. 8**

Output Data

Ganglion Emulator Module

Bipolar emulator Module

Weighted Combination

Horizontal Emulator

Photoreceptor emulator module

Original Image

**FIG. 9**

Output Value

Output Value Generator

Calculation Centre

DataInput

Emulator signals to which it connects or of the original image in the case of the photoreceptor emulator

**FIG. 10**

Model
Input

Original
Image

Photereceptor
& Horizontal

Bipolar

Ganglion

Color
Attributes

## FIG. 10

EP 2 487 650 B1

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. SIMINOFF.** SIMULATED BIPOLAR CELLS IN FÓVEA OF HUMAN RETINA. *BIOLOGICAL CYBERNETICS,* 1991, vol. 64, 497-504
- **H. MOMIJI H. ; A. A. BHARATH ; M. W. HANKINS ; C. KENNARD.** NUMERICAL STUDY OF SHORT-TERM AFTERIMAGES AND ASSOCIATE PROPERTIES IN FÓVEAL VISION. *VISION RESEARCH,* 2006, vol. 46, 365-381
- **D.S. LEBEDEV ; D.W. MARSHACK.** AMACRINE CELL CONTRIBUTIONS TO RED-GREEN COLOR OPPONENCY IN CENTRAL PRIMATE RETINA: A MODEL STUDY. *VISUAL NEUROSCIENCE,* 2007, vol. 24, 535-547
- **R.SIMINOFF.** SIMULATED BIPOLAR CELLS IN FÓVEA OF HUMAN RETINA. *BIOLOGICAL CYBERNETICS,* 1991, vol. 64, 497-504
- **M. SAGLAM ; Y. HAYASHIDA ; N. MURAYAMA.** A RETINAL CIRCUIT MODEL ACCOUNTING FOR WIDE-FIELD AMACRINE CELLS. *COGNITIVE NEURODYNAMICS,* 2008, vol. 3 (1), 25-32
- **S. SHAH ; M. D. LEVINE.** VISUAL INFORMATION PROCESS IN THE PRIMATE CONE PATHWAYS PART I MODEL. *IEEE TRANSACTIONS ON SYSTEMS, MAN AND CYBERNETICS - PART B CYBERNETICS,* 1996, vol. 26 (2), 259-274
- **D. BALYA ; B. ROSKA ; T. ROSKA ; F.S. WERBLIN.** A CNN FRAMEWORK FOR MODELING PARALLEL PROCESSING IN A MAMMALIAN RETINAL. *INTERNATIONAL JOURNAL OF CIRCUIT THEORY AND APPLICATIONS,* 2002, 363-393
- **J. H. VAN HATEREN ; L. RUTTIGER ; H. SUN ; B. B. LEE.** PROCESSING OF NATURAL TEMPORAL STIMULI BY MACAQUE RETINAL GANGLION CELLS. *THE JOURNAL OF NEUROSCIENCE,* 2002, vol. 22 (5), 9945-9960
- **W. RODIECK.** QUANTITATIVE ANALYSIS OF CAT RETINAL GANGLION CELL RESPONSE TO VISUAL STIMULI. *VISION RESEARCH,* 1965, vol. 5, 583-601
- **C. KOCH.** BIOPHYSICS OF COMPUTATION. OXFORD UNIVERSITY PRESS, 1999
- **SHAH, M. ; D. LEVINE.** VISUAL INFORMATION PROCESS IN THE PRIMATE CONE PATHWAYS PART I MODEL. *IEEE TRANSACTIONS ON SYSTEMS, MAN AND CYBERNETICS - PART B CYBERNETICS,* 1996, vol. 26 (2), 259-274

- **A. VALBERG ; T. SEIM.** NEURAL MECHANISMS OF CHROMATIC AND ACHROMATIC VISION. *COLOR RESEARCH & APPLICATION,* 2008, vol. 33 (I 6), 433-443
- **T. KUNKEL T ; E. REINHARD.** A NEUROPHYSIOLOGY-INSPIRED STEADY-STATE COLOR APPEARANCE MODEL. *JOSA A,* 2009, vol. 26 (4), 776-782
- **K. A. ZAGHLOUL.** OPTIC NERVE SIGNALS IN A NEUROMORPHIC CHIP I: OUTER AND INNER RETINA MODEL. *IEE TRANSACTIONS ON BIOMEDICAL ENGINEERING,* 2004, vol. 51 (4
- **S. GROSSBERG S ; E. MINGOLLA ; J. WILLIAMSON.** SYNTHETIC APERTURE RADAR PROCESSING BY A MULTIPLE SCALE NEURAL SYSTEM FOR BOUNDARY AND SURFACE REPRESENTATION. *NEURAL NETWORKS,* 1995, vol. 8 (7-8), 1005-1028
- **F. J. DÍAZ-PERNAS ; ANTÓN-RODRIGUEZ ; J. F. DÍEZ-HIGUERA ; M. MARTÍNEZ-ZARZUELA.** A BIO-INSPIRED NEURAL MODEL FOR COLOUR IMAGE SEGMENTATION. *ANNPR 2008,* 2008, 240-251
- **CARANDINI, D.J. HEEGER.** SUMMATION AND DIVISION BY NEURONS IN PRIMATE VISUAL CORTEX. *SCIENCE,* 1994, vol. 264, 1333-1336
- **D. J. HEEGER D. J. ; SIMONCELLI E. P. ; MOVSHON J. A.** COMPUTATIONAL MODELS OF CORTICAL VISUAL PROCESSING. *PROCEEDINGS OF THE NATIONAL ACADEMY OF SCIENCES,* 1996, vol. 93, 623-627
- **V. TORRE ; T. POGGIO.** A SYNAPTIC MECHANISM POSSIBLY UNDERLYING DIRECCIONAL SELECTIVITY TO MOTION. *PROC. ROY. SOC LOND. B,* 1978, vol. 202, 409-416
- **J. W PILLOW ; J. SHLENS ; L. PANINSKI ; A. SHER ; A. M. LITKE ; E. J. CHICHILNISKY ; E. P. SIMONCELLI.** SPATIO-TEMPORAL CORRELATIONS AND VISUAL SIGNALLING IN A COMPLETE NEURONAL POPULATION. *NATURE,* 2008, vol. 454, 995-999
- **MEISTER M ; BERRY MJ 2ND.** THE NEURAL CODE OF THE RETINA. *NEURON,* 1999, vol. 22 (3), 435-50
- **R. G. KUEHNI.** COLOR SPACE AND ITS DIVISIONS: COLOR ORDER FROM ANTIQUITY TO THE PRESENT. JOHN WILEY & SONS PUBLICATIONS, 2003

- **L. M. MARTINEZ.** THE GENERATION OF VISUAL CORTICAL RECEPTIVE FIELDS. *PROGRESS IN BRAIN RES.,* 2006, 154
- **G.Q. BI ; M.M. POO.** SYNAPTIC MODIFICATIONS IN CULTURED HIPPOCAMPAL NEURONS: DEPENDENCE ON SPIKE TIMING, SYNAPTIC STRENGTH, AND POSTSYNAPTIC CELL TYPE. *J. NEUROSCI.,* 1998, 18
- **M. C. BOOTH ; E. T. ROLLS.** VIEW-INVARIANT REPRESENTATIONS OF FAMILIAR OBJECTS BY NEURONS IN THE INFERIOR TEMPORAL VISUAL CORTEX. *CEREB. CORTEX,* 1998, 8
- **G. KREIMAN ; C.P. HUNG ; A. KRASKOV ; R.Q. QUIROGA ; T. POGGIO ; J.J. DICARLO.** OBJECT SELECTIVITY OF LOCAL FIELD POTENTIALS AND SPIKES IN THE MACAQUE INFERIOR TEMPORAL CORTEX. *NEURON,* 2006, vol. 49
- **T. SERRE ; L. WOLF ; S. BILESCHI ; M. RIESENHUBER ; T. POGGIO.** OBJECT RECOGNITION WITH CORTEX-LIKE MECHANISMS. *IEEE TRANSACTIONS ON PATTERN ANALYSIS AND MACHINE INTELLIGENCE,* 2007, vol. 29, 3
- **T. SERRE.** LEARNING A DICTIONARY OF SHAPE-COMPONENTS IN VISUAL CORTEX: COMPARISON WITH NEURONS, HUMANS AND MACHINES. 2006
- **C. VAN ESSEN.** PROCESSING OF COLOR, FORM AND DISPARITY INFORMATION IN VISUAL AREAS VP AND V2 OF VENTRAL EXTRASTRIATE CORTEX IN THE MACAQUE MONKEY. *J. NEUROSCI.,* 1986, vol. 6 (8), 2327-51
- **C. P. HUNG ; G. K. KREIMAN ; T. POGGIO ; J. J. DICARLO.** FAST READOUT OF OBJECT IDENTITY FROM MACAQUE INFERIOR TEMPORAL CORTEX. *SCIENCE,* 2005, 310
- **BENITEZ DIAZ et al.** Neural-like network model for color images analysis systems. *Proceedings of the IEEE International Conference on Neural Networks,* 1994, vol. 3, 1415-1420